# EUROPEAN PATENT SPECIFICATION

(11) **EP 3 805 271 B1**
(45) Date of publication and mention of the grant of the patent: **02.09.2026**
(21) Application number: 19812545.2
(22) Date of filing: 22.05.2019
(51) Int. Cl.: C08B 37/16, C08B 37/00

(54) **METHOD FOR PREPARING SUGAMMADEX SODIUM SALT**
VERFAHREN ZUR HERSTELLUNG VON SUGAMMADEX-NATRIUMSALZ
PROCÉDÉ DE PRÉPARATION DE SEL DE SODIUM SUGAMMADEX

(30) Priority: 28.05.2018 KR 20180060624
(43) Date of publication of application: 14.04.2021
(73) Proprietor: Yonsung Fine Chemical Co., Ltd., Hwaseong-si, Gyeonggi-do 18581 (KR)
(72) Inventor: MOON, Hyoung Wook, Paju-si, Gyeonggi-do 10909 (KR); YOON, Soo Hwan, Suwon-si, Gyeonggi-do 16675 (KR); LEE, Kee Young, Seoul 06762 (KR); SHIN, Hyun Ik, Suwon-si, Gyeonggi-do 16224 (KR)
(74) Representative: Schön, Christoph
(86) International application number: PCT/KR2019/006143
(87) International publication number: WO 2019/231166

(56) References cited:
- WO-A1-01/40316
- WO-A1-2014/125501
- WO-A1-2016/194001
- CN-A- 104 628 891
- CN-A- 104 844 732
- CN-A- 105 348 412
- US-A1- 2014 221 641
- US-A1- 2016 009 827
- US-A1- 2018 016 359

## Description

### [Technical Field]

The present invention relates to a process for preparing sugammadex sodium. More particularly, the present invention relates to an efficient process for preparing sugammadex sodium with high purity.

### [Background Art]

6-Mercaptocyclodextrin derivatives are useful for the reversal of drug-induced neuromuscular blockade. Particularly, U.S. Patent No. 6,670,340 discloses that sugammadex sodium represented by the following formula (1) (6-per-deoxy-6-per-(2-carboxyethyl)thio-gamma-cyclodextrin sodium salt) is useful for the reversal of neuromuscular blockade induced by rocuronium or vecuronium.

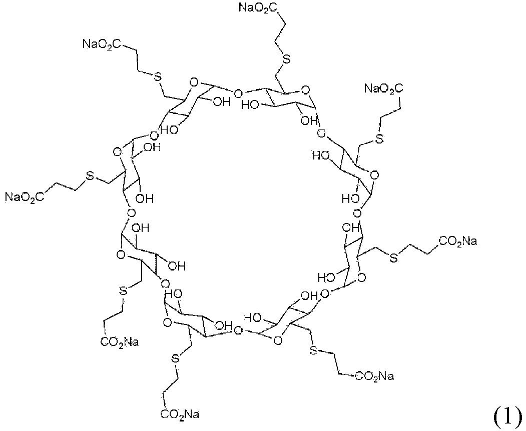

The sugammadex sodium of formula (1) is an active pharmaceutical ingredient (API) of Bridion which is an antagonist of muscle relaxants.

U.S. Patent No. 6,670,340 discloses a process for preparing sugammadex sodium by reacting 6-per-deoxy-6-per-iodo-gamma-cyclodextrin with 3-mercaptopropionic acid using an alkali metal hydride under the anhydrous DMF condition, as shown in the following reaction scheme 1.

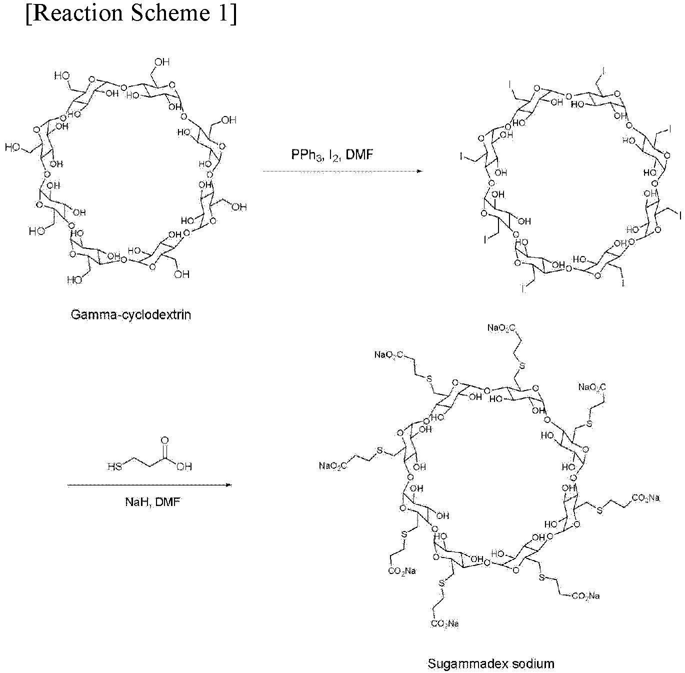

However, in the first reaction step of the preparation process of sugammadex sodium, triphenylphosphine oxide which is too difficult to remove is produced in the synthesis of 6-per-deoxy-6-per-iodo-gamma-cyclodextrin. Further, the alkali metal hydride used for the synthesis of the sugammadex sodium in the second reaction step is difficult to handle since it is sensitive to moisture. Also, the sugammadex sodium prepared by the preparation process has a problem of low purity.

Further, U.S. Patent No. 9,120,876 discloses a process for preparing sugammadex sodium by synthesizing 6-per-deoxy-6-per-halo-gamma-cyclodextrin using phosphorus halide and then reacting the 6-per-deoxy-6-per-halo-gamma-cyclodextrin with 3-mercaptopropionic acid using an alkali metal hydride as a base, as shown in the following reaction scheme 2.

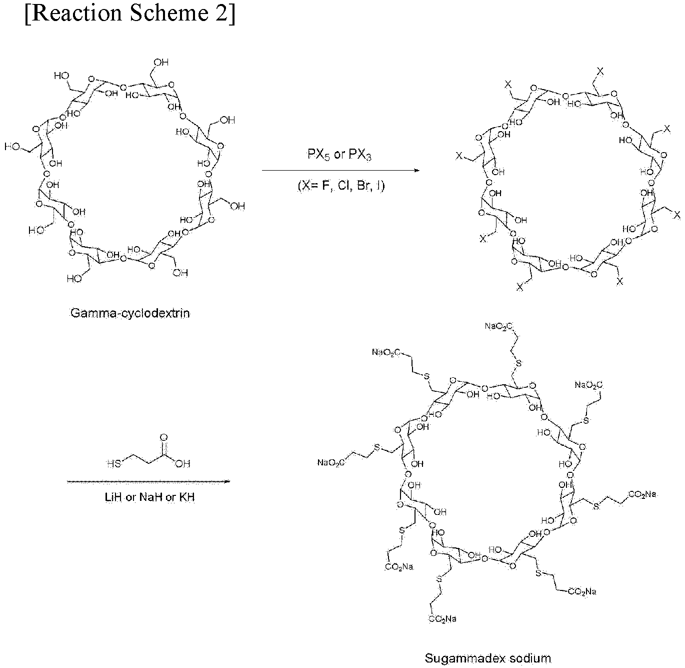

However, in the above preparation process of sugammadex sodium, phosphorus halide which is quite difficult to handle is used in the synthesis of the 6-per-deoxy-6-per-halo-gamma-cyclodextrin which is an intermediate, and triphenylphosphine oxide which is difficult to remove is produced. Also, the process has a problem of using the alkali metal hydride which is sensitive to moisture in the preparation of sugammadex sodium, and using column chromatographic membrane dialysis in the purification process, which makes it difficult to be applied to mass production in terms of costs.

CN 104 628 891 A discloses a method of preparing 6-deoxy-6-haloalkyl cyclodextrin, said method comprising the steps of reacting in a N, N-dimethylformamide solvent 1,3-dihalo-5, 5-dimethylhydantoin and triphenylphosphine to form a salt and thereafter reacting said salt with cyclodextrin to form 6-deoxy-6-haloalkyl cyclodextrin.

US 2016/009827 A1 discloses a process of preparing sugammadex sodium involving the steps of reacting γ-cyclodextrin with a phosphorous halide in an organic solvent to obtain 6-perdeoxy-6-per-halo-gamma-cyclodextrin, reacting said 6-perdeoxy-6-per-halo-gamma-cyclodextrin after isolation and washing with 3-mercapto propionic acid in the presence of an alkali metal alkoxide in an organic solvent and purifying the sugammadex or its pharmaceutically acceptable salts using water, organic solvents and activated carbon.

US 2018/0016359 A1 discloses a process of preparing sugammadex sodium, comprising the steps of reacting γ-cyclodextrin with iodine in the presence of triphenylphosphine in an organic solvent, adding a methanolic solution of sodium methoxide into the reaction system followed by the addition of acetone without removal of the solvent under reduced pressure to obtain crude 6-per-deoxy-6-iodo-y-cyclodextrin, purifying the crude 6-per-deoxy-6-iodo-γ-cyclodextrin by recrystallization from a mixture of DMF and acetone, reacting the recrystallized intermediate with 3-mercaptopropionic acid in a basic medium to obtain the crude sugammadex sodium, and purifying the crude sugammadex sodium by passing through adsorbents followed by recrystallization.

WO 01/40316 A1 discloses sugammadex sodium for use in the reversal of drug-induced neuromuscular block and discloses as an example a preparation method of sugammadex sodium comprising reacting 3-mercapto propionic acid in DMF with sodium hydride and adding said mixture dropwise to a solution of 6-perdeoxy-6-per-halo-gamma-cyclodextrin in DMF, precipitating and washing the resulting sugammadex sodium.

### [Disclosure]

### [Technical Problem]

It is an object of the present invention to provide a cost-effective and efficient process for preparing sugammadex sodium with high purity.

### [Technical Solution]

The process of the present invention is defined in appended claim 1. Preferred embodiments are defined in the appended dependent claims.

Hereinafter, the preparation process of the present invention is described in more detail referring to the following reaction scheme 3 and reaction scheme 4.

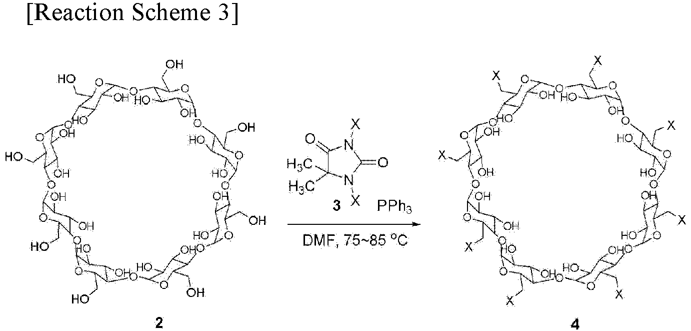

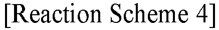

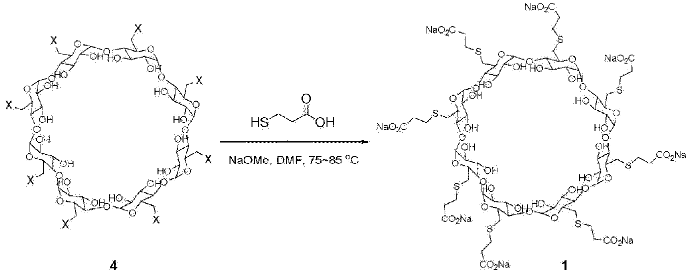

### Step 1: Synthesis of Compound of Formula (4)

The compound of formula (4) is prepared by reacting the compound of formula (2) with the compound of formula (3) in the presence of triphenylphosphine, wherein X is halogen.

The compound of formula (2) is dried to have a moisture content of 2 wt% or less, for example, 1 wt% to 2 wt%, particularly 2 wt% before it is used for the synthesis of the compound of formula (4).

The equivalent ratio of the compound of formula (2) to the compound of formula (3) may be 1 : 0.4 to 0.6, particularly 1:0.5.

As the reaction solvent, acetone, ACN, DMF or dimethyl sulfoxide (DMSO) may be used. Particularly, DMF is preferred.

The reaction temperature is suitably 50 to 90 °C, and the reaction time is preferably 5 to 15 hours.

The compound of formula (4) obtained by the step (i) is purified before it is used for the synthesis of the sugammadex sodium of formula (1).

Specifically, the compound of formula (4) is purified by recrystallization using dimethylformamide (DMF) and acetonitrile (ACN) to remove triphenylphosphine oxide.

The volume ratio of the dimethylformamide (DMF) to the acetonitrile (ACN) may be 1:1 to 1:5, preferably 1:2.

### Step 2: Preparation of Sugammadex Sodium of Formula (1)

The sugammadex sodium of formula (1) is prepared by reacting the compound of formula (4) with 3-mercaptopropionic acid in the presence of sodium hydroxide or sodium methoxide.

As the reaction solvent, acetone, ACN, DMF or DMSO may be used. Particularly, DMF is preferred.

The reaction temperature is suitably 50 to 90 °C, and the reaction time is preferably 10 to 20 hours.

The sugammadex sodium of formula (1) obtained by the step (ii) is purified with aminopropyl-functionalized silica to remove a heavy metal.

The sugammadex sodium of formula (1) can be contaminated with a heavy metal since the sulfur (S) atoms in the molecule may coordinate to the heavy metal. In accordance with the present invention, the heavy metal such as Fe or Cu is removed from the sugammadex sodium of formula (1) using the aminopropyl-functionalized silica.

As the aminopropyl-functionalized silica, commercially available products may be used. For example, QuadraSil AP from Johnson Matthey may be used.

The aminopropyl-functionalized silica may be used in an amount of 2 to 5 wt%, particularly 3 wt%, based on 100 wt% of the sugammadex sodium of formula (1).

### [Advantageous Effects]

In accordance with the preparation process of the present invention, sugammadex sodium having high purity can be efficiently prepared. Particularly, in accordance with the preparation process of the present invention, the phosphorus halide which is expensive and difficult to handle is not used in the synthesis of 6-per-deoxy-6-per-halo-gamma-cyclodextrin which is an intermediate, and triphenylphosphine oxide which is produced as a by-product can be efficiently removed. Thus, sugammadex sodium can be easily prepared with high purity.

### [Examples]

Hereinafter, the present invention will be described in more detail by the following examples.

### Example 1: Synthesis of Compound of Formula (4)

The compound of formula (3) (10.7 g) wherein X is Br was added to DMF (35.6 mL), followed by stirring. Triphenylphosphine (19.5 g) was dividedly added in 5 times thereto while maintaining the temperature of 10 °C or less, and the temperature was gradually raised to room temperature. A solution in which the compound of formula (2) (5.6 g) having moisture content adjusted to 2 wt% was diluted with DMF (35.6 mL) was added thereto, followed by stirring for 2 hours. The resulting solution was heated to 85 °C and stirred for 12 hours. The reaction progress was confirmed by HPLC. The resulting solution was cooled to room temperature, and methanol (14.7 mL) was added thereto, followed by stirring for 30 minutes. The temperature of the resulting solution was lowered to -10 °C, and then 25% sodium methoxide-methanol solution (10.47 mL) was added thereto, followed by stirring for 30 minutes. Distilled water (58.5 mL) was added dropwise thereto for 1 hour, and then stirred for 1 hour, followed by filtration. The filtered residue was washed with distilled water (15 mL) and filtered for 30 minutes. The filtered residue was added to methanol (93 mL) and stirred for 1 hour, followed by filtration with washing with methanol (24 mL). Vacuum drying was performed at 60 °C for 12 hours to give a compound of formula (4) (6.7 g).

### Example 2: Purification of Compound of Formula (4)

The compound of formula (4) (6.7 g) was added to DMF (22.4 mL), and stirred for 15 minutes, followed by filtration to remove impurities. The filtrate was warmed to 45 °C, and then ACN (45.2 mL) was added dropwise thereto for 1 hour. Then, the temperature was gradually lowered to room temperature, followed by stirring for 1 hour to give a solid precipitate. The filtration was carried out with washing with ACN (12.3 mL) for 30 minutes, and the filtered residue was vacuum-dried at 60 °C for 12 hours to obtain a compound of formula (4) (6 g, 77%). The purity of the obtained compound of formula (4) was 99.82%, and it was confirmed that triphenylphosphine oxide was completely removed.

¹H NMR (300 MHz, DMSO): δ 6.01-5.97 (2H, m), 5.02 (1H, d, *J =* 3.6 Hz), 3.98 (1H, d, *J* = 9.6 Hz), 3.82 (1H, t, *J* = 9.0 Hz), 3.71-3.59 (2H, m), 3.44-3.36 (2H, m).

### Example 3: Preparation of Sugammadex Sodium of Formula (1)

25% Sodium methoxide-methanol solution (11.43 mL) was added to DMF (24 mL), followed by stirring. The resulting solution was cooled to 0 °C, and 3-mercaptopropionic acid (2.18 mL) was added dropwise thereto while maintaining the temperature of 10 °C or less. The resulting solution was gradually warmed to room temperature and stirred for 1 hour. The solution in which the compound of formula (4) (3 g) was dissolved in DMF (9 mL) was added thereto, and then the temperature was raised to 85 °C, followed by stirring for 18 hours. The reaction progress was confirmed by HPLC. The resulting solution was cooled to room temperature, and then distilled water (36 mL) was added thereto, followed by warming to 50~60 °C. Then, methanol (50 mL) was added thereto at the same temperature. The resulting solution was cooled to room temperature and stirred for 2 hours, followed by filtration. The filtered residue was vacuum-dried at 60 °C for 12 hours to give sugammadex sodium of formula (1) (3.02 g, 83.5%).

### Example 4: Purification of Sugammadex Sodium of Formula (1)

The dried sugammadex sodium of formula (1) (2.53 g) was completely dissolved in distilled water (5.06 mL) and methanol (5.06 mL), and then an aminopropyl-functionalized silica (Johnson Matthey, QuadraSil AP) (0.0759 g) was added thereto, followed by stirring for 1 hour. After filtration, the filtrate was warmed to 50~60 °C, and then methanol (22.5 mL) was added thereto at the same temperature. The resulting solution was cooled to room temperature and stirred for 2 hours, followed by filtration. The filtered residue was vacuum-dried at 60 °C for 12 hours to give sugammadex sodium of formula (1) (3.0 g, 83 %). The purity of the sugammadex sodium of formula (1) was 97.69%.

¹H NMR (300 MHz, D₂O): δ 5.13 (1H, d, *J =* 3.9 Hz), 4.03-3.86 (1H, m), 3.90 (1H, t, *J* = 9.6 Hz), 3.63-3.56 (2H, m), 3.10-3.06 (1H, m), 2.94 (1H, dd, *J* = 13.8, 6.3 Hz), 2.81 (2H, t, *J* = 7.2 Hz), 2.46-2.41 (2H, m).

### Experimental Example 1: Moisture Content of Compound of Formula (2)

Compounds of formula (4) were synthesized using compounds of formula (2) having various moisture contents as shown in Table 1 below, and were analyzed by HPLC. The results are shown in Table 1 below.

**[Table 1]**

| Moisture Content | Area Value of Compound of Formula (4) | Area Value of Related Substance (Retention Time: 18.0 minutes) |
|---|---|---|
| 1.697 wt% | 99.54% | 0.13% |
| 2 wt% | 99.64% | 0.15% |
| 3 wt% | 0.65% | 99.34% |
| 5 wt% | 0.59% | 99.27% |
| 11 wt% | 0.11% | 99.88% |

From the results of Table 1 above, it can be confirmed that as the moisture content of the compound of formula (2) increased, the area value of the compound of formula (4) decreased and the area value of the related substance increased. In case of adjusting the moisture content of the compound of formula (2) down to 2 wt%, the area value of the compound of formula (4) was 99 wt% or more, and the area value of the related substance was 0.2% or less. Therefore, it can be confirmed that the yield of the compound of formula (4) can be highly increased by lowering the moisture content of the compound of formula (2) to 2 wt% or less.

### Experimental Example 2: Analysis of Removal of Heavy Metal Components in Sugammadex Sodium of Formula (1)

Amounts of heavy metal components were measured by Inductively Coupled Plasma Mass Spectrometer (ICP Mass), before and after the sugammadex sodium of formula (1) was purified with the aminopropyl-functionalized silica. The results are shown in Table 2 below.

**[Table 2]**

| | As | Cd | Cr | Cu | Hg | Mo | Ni | Pb | Sn | Fe |
|---|---|---|---|---|---|---|---|---|---|---|
| Before Treatment | N.D. | N.D. | N.D. | 41.3 ppm | N.D. | N.D. | N.D. | N.D. | N.D. | 345 ppm |
| After Treatment | N.D. | N.D. | N.D. | N.D. | N.D. | N.D. | N.D. | N.D. | N.D. | N.D. |

From the results of Table 2 above, it can be confirmed that the heavy metals were efficiently removed after the sugammadex sodium of formula (1) was purified with the aminopropyl-functionalized silica. Accordingly, it can be seen that the purification process using the aminopropyl-functionalized silica was effective in the reaction process.

## Claims

1. A process for preparing sugammadex sodium of the following formula (1), which comprises the steps of:
(i) reacting a compound of the following formula (2) dried to a moisture content of 2 wt% or less with a compound of the following formula (3) in the presence of triphenylphosphine to obtain a compound of the following formula (4), and subjecting the obtained compound of formula (4) to recrystallization using dimethylformamide (DMF) and acetonitrile (ACN) to remove triphenylphosphine oxide; and
(ii) reacting the compound of the following formula (4) with 3-mercaptopropionic acid in the presence of sodium hydroxide or sodium methoxide to obtain sugammadex sodium of the following formula (1), and purifying the obtained sugammadex sodium of formula (1) with an aminopropyl-functionalized silica to remove a heavy metal: 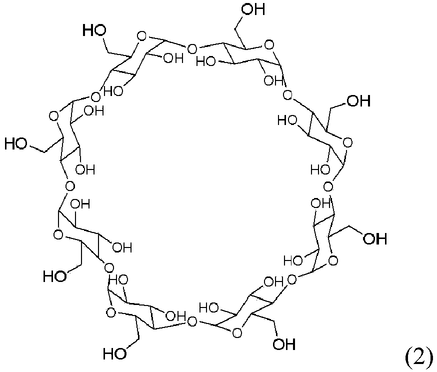 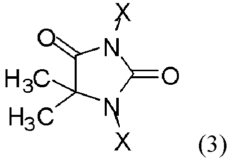 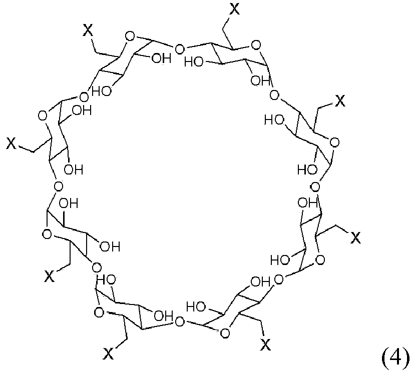 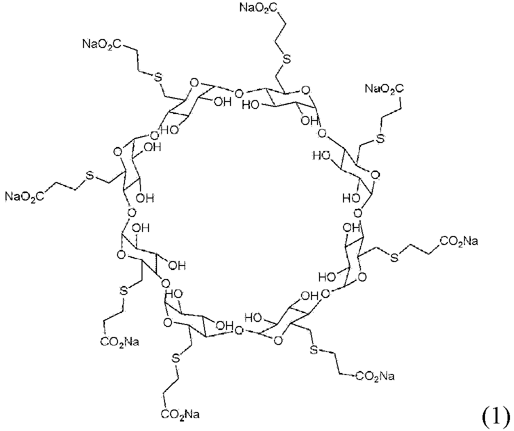 wherein,
X is halogen.

2. The process according to claim 1, wherein X is Br.

3. The process according to claim 1, wherein a volume ratio of the dimethylformamide (DMF) to the acetonitrile (ACN) is 1:1 to 1:5.

4. The process according to claim 1, wherein the aminopropyl-functionalized silica is used in an amount of 2 to 5 wt%, based on 100 wt% of the sugammadex sodium of formula (1).

## Patentansprüche

1. Verfahren zur Herstellung von Sugammadex-Natrium der folgenden Formel (1), wobei das Verfahren die folgenden Schritte umfasst:
(i) Umsetzen einer Verbindung der folgenden Formel (2), die auf einen Feuchtigkeitsgehalt von 2 Gew.-% oder weniger getrocknet wurde, mit einer Verbindung der folgenden Formel (3) in Gegenwart von Triphenylphosphin, um eine Verbindung der folgenden Formel (4) zu erhalten, und Unterziehen der erhaltenen Verbindung der Formel (4) einer Umkristallisation unter Verwendung von Dimethylformamid (DMF) und Acetonitril (ACN), um Triphenylphosphinoxid zu entfernen, und
(ii) Umsetzen der Verbindung der folgenden Formel (4) mit 3-Mercaptopropionsäure in Gegenwart von Natriumhydroxid oder Natriummethanolat, um Sugammadex-Natrium der folgenden Formel (1) zu erhalten, und Reinigen des erhaltenen Sugammadex-Natriums der Formel (1) mit einem Aminopropyl-funktionalisierten Siliciumdioxid, um ein Schwermetall zu entfernen: 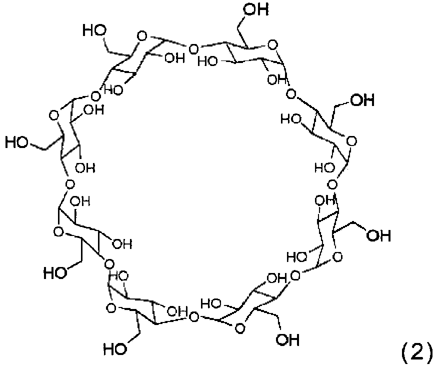 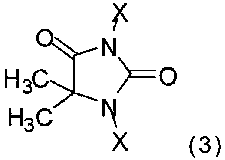 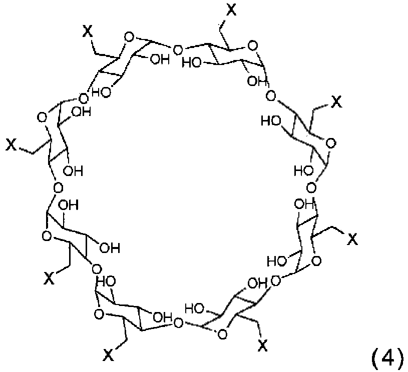 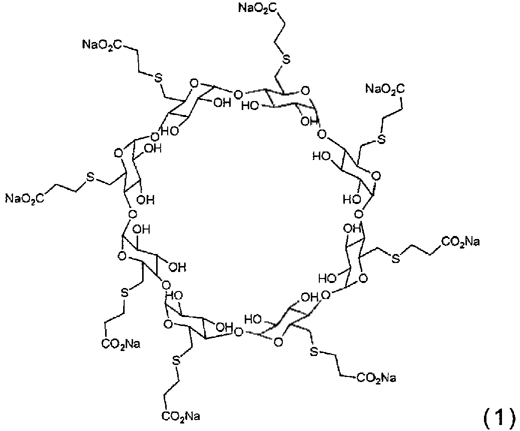 wobei X für ein Halogen steht.

2. Verfahren gemäß Anspruch 1, wobei X für Br steht.

3. Verfahren gemäß Anspruch 1, wobei das Volumenverhältnis des Dimethylformamids (DMF) zu dem Acetonitril (ACN) 1:1 bis 1:5 beträgt.

4. Verfahren gemäß Anspruch 1, wobei das Aminopropyl-funktionalisierte Siliciumdioxid in einer Menge von 2 bis 5 Gew.-%, bezogen auf 100 Gew.-% des Sugammadex-Natriums der Formel (1), verwendet wird.

## Revendications

1. Procédé de préparation du sugammadex sodique selon la formule suivante (1), comprenant les étapes suivantes :
(i) faire réagir un composé de la formule suivante (2) séché jusqu'à une teneur en humidité de 2 % en poids ou moins avec un composé de la formule suivante (3) en présence de triphénylphosphine pour obtenir un composé de la formule suivante (4), et soumettre le composé de formule (4) obtenu à une recristallisation en utilisant du diméthylformamide (DMF) et de l'acétonitrile (ACN) pour éliminer l'oxyde de triphénylphosphine ; et
(ii) faire réagir le composé de la formule suivante (4) avec l'acide 3-mercaptopropionique en présence d'hydroxyde de sodium ou de méthylate de sodium pour obtenir le sugammadex sodium de formule suivante (1), et purifier le sugammadex sodium de formule (1) obtenu avec une silice fonctionnalisée à l'aminopropyle pour éliminer un métal lourd : 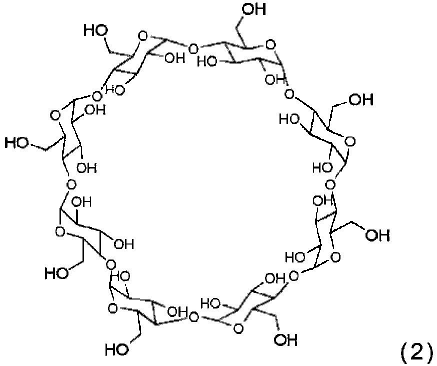 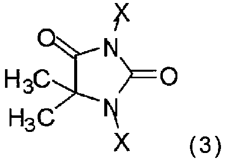 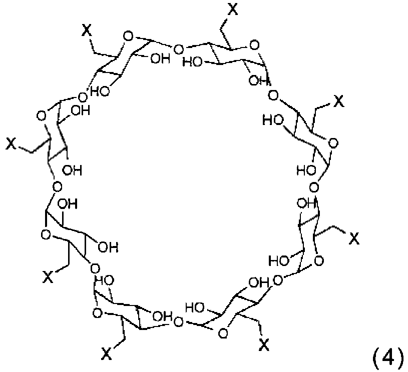 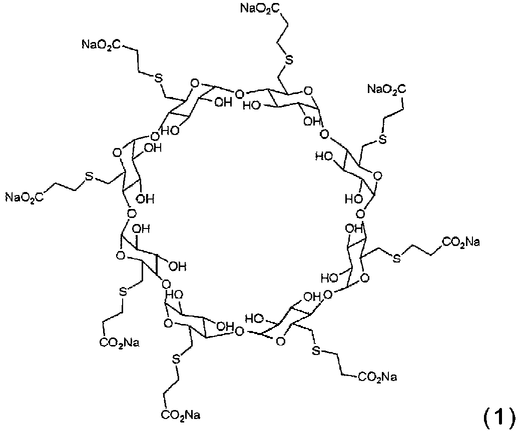 où X représente un halogène.

2. Le procédé selon la revendication 1, dans lequel X est Br.

3. Le procédé selon la revendication 1, dans lequel le rapport volumique du diméthylformamide (DMF) à l'acétonitrile (ACN) est de 1:1 à 1:5.

4. Le procédé selon la revendication 1, dans lequel la silice fonctionnalisée à l'aminopropyle est utilisée en une quantité de 2 à 5 % en poids, basée sur 100 % en poids du sugammadex sodium de formule (1).
